# EUROPÄISCHE PATENTSCHRIFT

(11) **EP 0 813 368 B1**
(45) Veröffentlichungstag und Bekanntmachung des Hinweises auf die Patenterteilung: **06.12.2000**
(21) Anmeldenummer: 96903926.2
(22) Anmeldetag: 26.02.1996
(51) Int. Cl.: A21D 6/00, A21D 13/06

(54) **VERFAHREN ZUM HERSTELLEN EINES MAHLPRODUKTTEIGES**
PROCESS FOR PRODUCING A DOUGH MADE FROM A FLOUR PRODUCT
PROCEDE DE FABRICATION D'UNE PATE A PARTIR D'UN PRODUIT MOULU

(30) Priorität: 06.03.1995 DE 19507748
(43) Veröffentlichungstag der Anmeldung: 29.12.1997
(73) Patentinhaber: WESTFALIA SEPARATOR AG, 59302 Oelde (DE)
(72) Erfinder: PAHNE, Norbert, D-12059 Berlin (DE); MEUSER, Friedrich, D-13353 Berlin (DE)
(74) Vertreter: Goddar, Heinz J., Dr.
(86) Internationale Anmeldenummer: DE9600354
(87) Internationale Veröffentlichungsnummer: WO9627294

(56) Entgegenhaltungen:
- EP-A- 0 058 133
- EP-A- 0 452 847
- US-A- 3 397 067
- DATABASE WPI Section Ch, Week 8616 Derwent Publications Ltd., London, GB; Class D17, AN 86-100683 XP002005868 & DD,A,231 077 (VE STARKE KARTOFFE) , 18.Dezember 1985
- BAKER'S DIGEST, Nr. 2, 1983, PONTIAC, ILLINOIS US, Seiten 10-15+20, XP002005867 PAO-WEN ET AL.: "Breadmaking integrated with wet-processing of wheat flour."

## Beschreibung

Die Erfindung betrifft ein Verfahren zum Herstellen eines Mahlproduktteiges, insbesondere auf Weizenbasis, bei dem eine Mahlprodukt-Wasser-Mischung unter Energieeintrag einer zur Agglomeration der Kleberproteine führenden mechanischen Behandlung unterworfen wird.

Es sind eine Reihe verschiedener Verfahren zur Herstellung von Teigen aus Mahlprodukten, insbesondere Weizenmahlerzeugnissen, bekannt. Allen ist gemeinsam, daß sie darauf gerichtet sind, durch mechanische Energieübertragung in einer Mischung aus Weizenmahlerzeugnis und Wasser die Eigenschaft der kleberbildenden Weizenproteine herauszubilden, in eine zusammenhängende plastisch-elastische Masse überzugeben. Für die mechanische Energieübertragung sind unterschiedliche Maschinen konstruiert worden, unter denen vor allem für die Herstellung zum Brotbakken geeigneter Teig Kneter und, seit der Erfindung des "Chorleywood dough making process" (beschrieben in THE BAKERS DIGEST 1962, S. 52/53; Proceedings of an International Conference on Bread-Breeding to Baking, 15/16, 1993, S. 77 - 83), auch Mixer eingesetzt werden. Solche Teige werden meistens aus einem Teil Mehl und 0,5-0,8 Teilen Wasser hergestellt.
EP-A-0 058 133 (OY VEHNÄ AB) 18.August 1982 und
DATABASE WPI Section Ch, Week 8616 Derwent Publications Ltd., London, GB; Class D17, AN 86-100683 XP002005868 & DD,A,231 077 (VE STARKE KARTOFFE) , 18.Dezember 1985, *Zusammenfassung* und
BAKER'S DIGEST, Nr. 2, 1983, PONTIAC, ILLINOIS US, Seiten 10-15+20, XP002005867 PAO-WEN ET AL.: 'Breadmaking integrated with wet-processing of wheat flour' und
EP-A-0 452 847 (ASAHI DENKA KOGYO KABUSHIKI KAISHA) 23.Oktober 1991 beschreiben Verfahren, in denen eine zentrifugale Trennung der Stärke von den Kleberproteinen vorgenommen wird.

Die maschinentechnische Ausgestaltung der Kneter wurde im Laufe der Zeit darauf ausgerichtet, die zur Teigbildung notwendige Knetenergie in möglichst kurzer Zeit zu übertragen. Dies führte schließlich zu der bahnbrechenden Erfindung des Einsatzes von Mixern zur Energieübertragung. Mit Intensivknetern und Mixern ist es möglich, die zur vollen Entwicklung der Kleberstruktur notwendige Energie im Bereich von < 2 Minuten zu übertragen. Für die zum Brotbacken optimale Entwicklung der Kleberstruktur im Teig, von der im wesentlichen die maschinelle Verarbeitbarkeit der Teige sowie das Volumen und die Porung der Gebäcke abhängen, werden etwa 11 Wh/kg benötigt. Die Energieübertragung führt durch die Energieaufnahme des Teiges, von der ein Teil für die Kleberstrukturbildung durch Dehnen und Walken der sich bildenden Kleberfilme und -stränge absorbiert wird, in Abhängigkeit von der Feststoffkonzentration zu einer Temperaturerhöhung des Teiges im Bereich um 10°K. In der Temperaturerhöhung kommt zwar die von der Gesamtmasse absorbierte Energie zum Ausdruck, sie läßt allerdings nicht erkennen, welcher Anteil davon zur Agglomeration der Kleberproteine durch molekulare Vernetzung verwendet wird.

Für die Energieübertragung ist es nun von entscheidender Bedeutung, daß diese zwar von dem Werkzeug (z.B. Knetspirale, Mixscheibe) verursacht, jedoch unmittelbar nur teilweise von ihm bewirkt wird. Der größte Anteil der Energieübertragung erfolgt über die mittelbare Wirkung der Stärkekörner im Teig. Diese wirken, angetrieben durch das Knetwerkzeug, das permanent die Position der Stärkekörner verändert, als kleinste Knetwerkzeuge. Sie dehnen und walken den sich zwischen ihnen bildenden Kleberfilm, so daß in Folge des Ablaufs der chemischen Vernetzung der Kleberproteinmoleküle ein plastisch-elastisches Netzwerk entsteht, das die Stärkekörner homogen verteilt umschließt. Die Gesamtmasse ist der Teig. Die Stärkekörner erfüllen ihre Funktion als Mittler zur Energieübertragung in Abhängigkeit vom Mehl-Wasser-Verhältnis der Mischung in unterschiedlicher Intensität (W. Bushuk "Wheat - Production, Properties and Quality", 1994, S. 179 - 204). Mit zunehmendem Wasseranteil läßt die Intensität ihrer Wirkung auf die Energieübertragung nach. Dies ist vor allen Dingen im Zusammenhang mit der Teigbildung von Interesse, die der Trennung von Weizenstärke und -kleber vorausgeht. Diese erfolgt bei neueren Verfahren unter Bedingungen, die gegenüber Teigen für Backwaren vor allem durch eine erheblich niedrigere Feststoffkonzentration gekennzeichnet sind. Sie machen sich die Erkenntnis zunutze, daß für die Stärke-Kleber-Trennung die Kleberproteine nicht bis zu dem für das Backen von Teigen erforderlichen Grad agglomeriert sein müssen.

Der Erfindung liegt die Aufgabe zugrunde, ein Verfahren der gattungsgemäßen Art zu schaffen, welches es ermöglicht, eine zur Herstellung von Teigen mit Knetern vergleichbar effektive Kleberagglomeration in einem kontinuierlichen Massestrom zu erreichen, der aus Mahlprodukt und Wasser besteht, wobei aus dessen Feststoffanteil nach der Teigbildung Stärke und Kleber gewinnbar sein sollen.

Erfindungsgemäß wird diese Aufgabe dadurch gelöst, daß die mechanische Behandlung der Mahlprodukt-Wasser-Mischung unter Einsatz von Zentrifugalkräften erfolgt.

Nach der Erfindung kann vorgesehen sein, daß das Mischen von Mahlprodukt und Wasser und/oder die Zentrifugalbehandlung kontinuierlich erfolgt/erfolgen.

Dabei kann vorgesehen sein, daß das Mischen von Mahlprodukt und Wasser und/oder die Zentrifugalbehandlung diskontinuierlich erfolgt/erfolgen.

Außerdem sieht die Erfindung vor, daß das Mischen von Mahlprodukt und Wasser und die Zentrifugalbehandlung in einer Verweilzeit von 1 bis 30 Minuten erfolgen.

Die Erfindung schlägt auch vor, daß das Mischen von Mahlprodukt und Wasser und die Zentrifugalbehandlung in einer Verweilzeit von etwa 5 Minuten erfolgen.

Eine weitere Ausführungsform der Erfindung sieht vor, daß der Mahlproduktteig in Produktströme aufgeteilt und die Produktströme mit Prozeßwasser raffiniert werden.

Nach der Erfindung kann auch vorgesehen sein, daß die Gesamtverweilzeit, beginnend mit dem Mischen von Mahlprodukt und Wasser bis zur Raffination der Produktströme mit Prozeßwasser, unter den Prozeßbedingungen kleiner als die Generationszeit von Milchsäurebakterien ist.

Ferner sieht die Erfindung vor, daß eine Mahlprodukt-Wasser-Mischung mit einem Trockenmassenanteil an Mahlprodukt von 10 bis 50 Gew.-% verwendet wird.

Die Erfindung sieht auch vor, daß eine Mahlprodukt-Wasser-Mischung mit einem Trockenmassenanteil an Mahlprodukt von 10 bis 25 Gew.-% verwendet wird.

Dabei kann vorgesehen sein, daß eine Mahlprodukt-Wasser-Mischung mit einem Trockenmassenanteil an Mahlprodukt von etwa 17,5 Gew.-% verwendet wird.

Nach der Erfindung kann vorgesehen sein, daß eine Mahlprodukt-Wasser-Mischung mit einem Trockenmassenanteil an Mahlprodukt von etwa 25 Gew.-% verwendet wird.

Außerdem kann vorgesehen sein, daß die Zentrifugalbehandlung in einer Dekantierzentrifuge erfolgt.

Die Erfindung schlägt auch vor, daß ein Oberlauf an Flüssigkeit abgeschieden wird, in dem Teile der löslichen Masse des Mahlproduktes enthalten sind.

Eine weitere Ausführungform der Erfindung sieht vor, daß der Oberlauf neben Teilen der löslichen Masse aus dem Mahlprodukt auch Feststoffanteile und Hydrokolloide aus dem gebildeten Teig enthält.

Nach der Erfindung kann auch vorgesehen sein, daß der Oberlauf im Kreislauf geführt wird und zusammen mit der Suspendierung sowie Dispergierung der Mahlproduktpartikel erfolgt.

Weiterhin sieht die Erfindung vor, daß der Oberlauf im Gegenstrom zur Raffination der Produktströme und der Trennung des Teiges in die Produktströme erfolgt.

Ferner ist vorgesehen, daß der Oberlauf aus der Zentrifugalbehandlung eine Konzentration an gelösten Stoffen von 3 bis 7 Gew.-% aufweist.

Nach der Erfindung kann auch vorgesehen sein, daß der Oberlauf aus der Zentrifugalbehandlung eine Konzentration an gelösten Stoffen von etwa 6 Gew.-% aufweist.

Dabei kann vorgesehen sein, daß als Mahlprodukt Weizenmehl eingesetzt wird.

Außerdem kann vorgesehen sein, daß ein Kleie enthaltendes Mahlprodukt angesetzt, die Kleie vor der Zentrifugalbehandlung aus der Mahlprodukt-Wasser-Mischung naß abgesiebt und der Unterlauf des Siebes der Zentrifugalbehandlung unterworfen wird.

Die Erfindung schlägt auch vor, daß als Mahlprodukt ein Vollkornmahlprodukt eingesetzt wird.

Eine weitere Ausführungsform der Erfindung sieht vor, daß ein mit einer Hammermühle hergestelltes Mahlprodukt eingesetzt wird.

Außerdem ist erfindungsgemäß vorgeschlagen, daß ein mittels eines Ultra-Rotors oder dergleichen hergestelltes Mahlprodukt eingesetzt wird.

Dabei kann vorgesehen sein, daß das in der abgesiebten Kleie enthaltene Phytat unter der Einwirkung der mahlprodukteigenen Phytase nach Einstellen des pH-Werts und der Temperatur auf das Optimum des Enzyms abgebaut wird.

Die Erfindung sieht auch vor, daß die pH-Werteinstellung über eine mikrobiologische Milchsäurebildung in der feuchten Kleie erfolgt.

Schließlich sieht die Erfindung vor, daß aus dem Mahlproduktteig Kleber und Stärke gewonnen werden.

Der Erfindung liegt die überraschende Erkenntnis zugrunde, daß es möglich ist, Suspensionen (Dispersionen) aus Mehl und Wasser in Dekantierzentrifugen so zu entwässern, daß bei Einhalten einer geeigneten Verweilzeit für den Hauptmasseanteil der unlöslichen Feststoffe es zu der für die nachfolgende Trennung von Stärke und Kleber notwendigen Kleberagglomeration kommt. Die aus der Dekantierzentrifuge am Unterlauf austretende Masse nimmt unter den für die Prozeßführung charakteristischen Abscheidebedingungen, welche durch die Feststoffkonzentration im Massestrom sowie die Drehzahl und Differenzdrehzahl der Dekantiertrommel und -schnecke eingestellt werden, eine teigähnliche Konsistenz an. In ihr ist die Stärke im Kleber homogen verteilt. Die Wahl der Feststoffkonzentration bestimmt das Verhältnis aus dem Teigvolumenstrom und dem Volumenstrom des Suspendierungsmittels, in dem Teile der löslichen Masse des Mehles gelöst vorkommen. Dieses Verhältnis ist für den Füllgrad der Teigbildungszone entscheidend und ist im Zusammenhang mit der Wahl der anderen Einstellparameter für die Kleberagglomeration bzw. -strukturbildung entscheidend.

Die Entwässerung der Suspension erfolgt derart, daß es zu einer Separierung von Stärkekörnern und den sie einhüllenden Kleberproteinen kommt. Dadurch gelingt es, daß die Masse unter Einwirkung von Zentrifugalkraft stark verdichtet wird. Durch den Vorschub der Masse insbesondere entlang dem Konus der Dekantertrommel, der durch die Dekanterschnecke verursacht wird, kommt es in der verdichteten Masse zu einer örtlichen Verlagerung der Stärkekörner. Dieser Vorgang ist dem beim Kneten vorkommenden zu vergleichen. Er kann in der Nähe des Ausgangs aus dem Dekanter, an dem der höchste Grad der Entwässerung erreicht wird, unter einer zum Teigkneten vergleichbaren Feststoffkonzentration (≈ 50 %) erfolgen. In den Kleber wird demzufolge unter der mittelbaren Wirkung der Stärkekörner die für seine Agglomeration und Strukturbildung notwendige Energie übertragen.

Diese Art der Energieübertragung zeichnet sich gegenüber der beim Knetvorgang in Mixern und Knetern erfolgenden dadurch aus, daß bei ihr ein wesentlich kleinerer relativer Massetransport vorkommt. Dieser ist folglich für die Teigbildung unter Zentrifugalkrafteinwirkung bezogen auf die Kleberagglomeration wesentlich weniger energieaufwendig. Der Energieaufwand liegt bei höherer Effektivität in bezug auf die Kleberagglomeration im Bereich des bei der Teigbildung mit Lochscheibenmischern und Homogenisatoren vorkommenden. Bezogen auf den Gesamtmassestrom in der Dekantierzentrifuge werden für den Vorgang der Teigbildung einschließlich der Abtrennung eines Oberlaufes 4 - 8 Wh/kg Masse aufgewendet. Von diesem wird wiederum nur ein Bruchteil für die eigentliche Kleberagglomeration eingesetzt. Der Massestrom im Oberlauf kann ≥ 0 kg/h sein.

Vorteilhaft ist für dieses Verfahren, daß beim Entwässern der Suspension bereits ein Teil der löslichen Masse aus dem Mehl und Teile der hydratisierten Pentosane zusammen mit Sekunda-Stärke in den Oberlauf gelangen können. Dies bildet die Voraussetzung für die zweite Zielsetzung der Erfindung, die in Lösung gebrachten löslichen Inhaltsstoffe des Mehls von unlöslichen Inhaltsstoffen zu trennen. Die gelösten Inhaltsstoffe können durch Kreislaufförderung des vom Feststoffanteil befreiten Volumenstroms so angereichert werden, daß eine Lösung mit einem Trockenmassegehalt von = 6 % entsteht.

Bei der Erfindung ist vorgesehen, daß die der Gewinnung von Weizenstärke und -kleber vorausgehende Bildung des Teiges, vorzugsweise eines Weizenmehlteiges, der insbesondere zur Gewinnung von Weizenstärke und -kleber aus Weizenmahlerzeugnissen, wie hellen Mehlen oder Vollkornmehlen, dient, durch Agglomeration des Klebers derart neu gestaltet wird, daß die zur Kleberagglomeration notwendige Energieübertragung, die üblicherweise durch Kneten oder Mixen einer Mehl-Wasser-Mischung im Verhältnis von 1 Teil Mehl zu ≤ 1 Teil Wasser erfolgt, mit einer wesentlich höher verdünnten Mehl-Wasser-Mischung (Verhältnis von 1 Teil Mehl zu >> 1 Teil Wasser) unter der Einwirkung von Zentrifugalkräften erfolgt.

Mit dieser Teigbildung wird zugleich das weitere Ziel erreicht, die Prozeßwasserführung des Weizenstärkegewinnungsprozesses so umzugestalten, daß die löslichen Inhaltsstoffe des Weizenmehls vor und während der Teigbildung sowie während der anschließenden Trennung des Teiges in die Produktströme in Lösung gebracht werden. Das Lösen dient dazu, um die löslichen Stoffe während der Zentrifugalabscheidung des sich aus den unlöslichen Feststoffen bildenden Teiges sowie während der zentrifugalen Trennung des mit Prozeßwasser verdünnten Teiges als Überstand (Überlauf) in Form einer Lösung zu gewinnen. Die Lösung wird durch Gegenstrom und Kreislaufführung des Prozeßwassers so konzentriert (^{~} 6 % Trockenmassegehalt), daß zwischen der Konzentration des Überlaufs aus der Teigbildung und der zu lösenden Masse für den Lösungsvorgang praktisch kein nutzbares Konzentrationsgefälle mehr besteht.

Da die Erfindung insbesondere eine Weiterbildung der neueren Verfahrenstechnik zur Weizenstärke- und -klebergewinnung betrifft, soll im folgenden der dafür erreichte Stand der Technik geschildert werden, so wie er für das Verständnis der Erfindung relevant ist. Diesbezüglich sei vorab darauf hingewiesen, daß es für die Trennung des Klebers von der Stärke lediglich darauf ankommt, die Kleberstruktur im Hinblick auf die Trenntechnik und die erzielbare Kleberausbeute optimal zu entwickeln. Zur Erfüllung beider Kriterien kann als Vergleich das Martin-Verfahren herangezogen werden.

Die neuere Entwicklung der Verfahrenstechnik in Weizenstärkefabriken ist durch zwei wesentliche Fortschritte gekennzeichnet. Sie bestehen in der Agglomeration des Klebers mit kontinuierlich arbeitenden Mischern (Lochscheibenmischern, Zahnscheibenmühlen) sowie Homogenisatoren und der zentrifugalen Trennung des Klebers von der Stärke mit Dekantern oder Hydrozyklonen (Schriftenreihe des Bundesministers für Ernährung, Landwirtschaft und Forsten, Reihe A: Angewandte Wissenschaft - Sonderheft -, Tagungsband 2. Symposium Nachwachsende Rohstoffe - Perspektiven für die Chemie, 5./6. Mai 1993 Frankfurt, 1993, S. 115 - 144). Diese Entwicklungen führten zu einer Ablösung des über lange Zeit wichtigsten Verfahrens, dem Martin-Verfahren, bei dem die Stärke durch Auswaschen eines Teiges aus Mehl und Wasser in Auswaschapparaten vom Kleber getrennt wird. Der Teig wird zuvor durch Mischen mit Wasser in einem Kneter gebildet, wobei der Kleber, wie zuvor für die Bildung von Teigen zum Brotbacken beschrieben, durch den Knetvorgang agglomeriert wird.

Die Agglomeration des Klebers stellt zwar die wesentlichste Voraussetzung für seine Trennbarkeit von der Stärke durch Auswaschen dar, der Auswaschvorgang ist aber nicht an die Teigmasse gebunden. Das konnte durch die Entwicklung des Batter-Verfahren (R. L. Whistler/E. F. Paschall "Starch: Chemistry and Technology", Vol. 2 "Industrial Aspects", 1967, S. 55 - 61) bewiesen werden, bei dem ein weicher Teig unter Zufügen von Wasser in einer Kreiselpumpe in kleinere Teigteile aufgelöst wird, die ohne wesentliche Verluste an Kleber über Sieben ausgewaschen werden können. Diese Kenntnis war im Hinblick auf die zentrifugalen Trenntechniken für die Entwicklung der neuen Agglomerationsverfahren von grundsätzlicher Bedeutung, da die zentrifugale Trennung in Dekantern und Hydrozyklonen voraussetzt, daß die zu trennende Masse diesen in pumpfähiger Form zugeführt wird.

Dazu kann beispielsweise ein hochviskoser Teig, ähnlich wie beim Batter-Verfahren, durch Zugabe von Wasser in eine pumpfähige Dispersion verwandelt werden. Dieser Weg braucht jedoch nicht beschritten zu werden, weil der Kleber auch mit Mischern und Homogenisatoren agglomeriert werden kann. Die Agglomeration erfolgt dabei im wesentlichen durch Friktion der Masse, an der allerdings die Stärkekörner, anders als beim Kneten und Mixen, ihre mittelbare Wirkung weniger entfalten können. Das Ausmaß der Agglomeration hängt dabei von der erzielbaren Friktion des Klebers ab, die u.a. durch die Konzentration der Dispersionen in gewissen Grenzen beeinflußt werden kann.

In der Anwendung dieser Technik ist gerade deshalb ein sehr großer Fortschritt zu sehen, weil die Bindung der Stärke- und Klebergewinnung an die Teigbildung über Kneter lange Zeit den Bau großer Weizenstärkefabriken behindert hatte. Es ist deshalb seit langem nach Verfahren gesucht worden, mit denen die Kleberagglomeration in großen Masseströmen kontinuierlich erfolgen kann. Eine prozeßtechnische Lösung ist darin gefunden worden, daß Mischungen aus Mehl und Wasser mit einer Feststoffkonzentration von ca. 35 - 40 % zunächst in einem kontinuierlich arbeitenden Mischer in einer Durchlaufzeit von nur wenigen Sekunden gründlich gemischt wird, wodurch eine Teilagglomeration des Klebers erfolgt. Die austretende Masse wird dann durch das Ventil eines Homogenisators gepumpt. Im Ventilspalt erfolgt eine weitere Energieübertragung in den Kleber. Die entstehende teigähnliche Masse wird in einen Behälter gepumpt, dessen Volumen so bemessen ist, daß die Masse zur weiteren Kleberagglomeration einer gewissen Ruhezeit ausgesetzt wird. Danach wird die Masse zur Vorbereitung auf die zentrifugale Trennung des Klebers von der Stärke mit Wasser verdünnt.

Die zentrifugale Trennung führt gegenüber dem Auswaschen des Teiges zu einer unterschiedlichen Aufteilung der Massebestandteile. Während der Kleber beim Auswaschen eine gereinigte Substanzfraktion und die Stärke zusammen mit den unlöslichen Schleimstoffen eine zweite im Prozeßwasser suspendierte Fraktion bilden, wird bei den zentrifugalen Trennungen eine relativ reine Prima-Stärke-Fraktion und eine Fraktion erhalten, in welcher der Kleber, die Sekunda-Stärke und die Schleimstoffe angereichert sind.

Der wesentliche Fortschritt der zentrifugalen Trennung gegenüber dem Auswaschen besteht darin, daß die Hauptmasse, die Prima-Stärke, in Sekundenschnelle aus der verdünnten Dispersion abgetrennt wird, während der gleiche Vorgang beim Auswaschen bis zu einer halben Stunde dauert. Diese Verkürzung der Verweilzeit der Masse im Trennsystem wirkt sich zusammen mit der Pro-Zeiteinheit im gesamten System befindlichen Feststoff- und Wassermasse, die im Vergleich zu der im Martin-Prozeß vorhandenen etwa 20 mal kleiner ist, sehr vorteilhaft für die Führung des Prozeßwassers und dessen pH-Wert aus.

Mit Dekantern ist es möglich, die Dispersion durch geeignete Verdünnung in drei feststoffhaltige Fraktionen zu zerlegen. Das kommt vor allem der notwendigen Raffination des Klebers zugute, da auf diese Weise die den Kleber enthaltende Fraktion sowohl von Feststoffen als auch gelösten Stoffen entlastet wird.

Der Prozeßwasserstrom wird teilweise dazu verwendet, um die Dispersion vor der Dekantation zu verdünnen. Dadurch gelingt es, bei konstantem Massestrom im Prozeßwasser eine konstante Konzentration gelöster Stoffe von 3,0 - 3,3 % einzustellen. Eine höhere Konzentration kann im Prozeßwasser wegen der vorgegebenen Produktreinheiten nicht erreicht werden, so daß damit auch der Volumenstrom des Prozeßwassers festgelegt ist, der als Abwasser zu behandeln ist.

Eine entscheidene Erhöhung der Prozeßwasserkonzentration zur Verminderung des Abwasservolumens setzt voraus, daß die Mehltrockenmasse einer vollständig anderen Vorbereitung unterzogen wird. Darin bestand neben dem Ziel der Neugestaltung der Kleberagglomeration in Mehl-Wasser-Mischungen unter dem Einfluß einer Zentrifugalkraft die weitere Zielsetzung der Erfindung.

Hinsichtlich der ersteren Zielsetzung ist herauszustellen, daß gegenüber der Kleberagglomeration in Teigen relativ hoher Feststoffkonzentration (≈ 50 %) mit Knetern und Mixern, die in einem einzigen Schritt erfolgt, die Kleberagglomeration in Massen kleinerer Feststoffkonzentration (≈ 40 %) zum Nachteil hat, daß sie über die Schritte Mischen, Hockdruckdispergieren und Abstehen verläuft. Jeder dieser Schritte übt in Abhängigkeit von den Eigenschaften des Klebers und seiner Bildung unter den Verfahrensbedingungen einen definierten Einfluß auf die Trennbarkeit von Stärke und Kleber sowie die Kleberausbeute aus. Diese drei Schritte sind zusammen erheblich schwerer aufeinander abzustimmen und zu kontrollieren, als es die Kleberbildung in einem Schritt durch Kneten eines festen Teiges ist. Aus dieser Problematik ergab sich die bereits beschriebene Aufgabenstellung für die Erfindung.

Die mit der Erfindung erzielbaren Vorteile bestehen vor allem darin, daß der Frischwasserbedarf für die Weizenstärke- und - klebergewinnung gegenüber dem Stand der Technik erheblich reduziert werden kann. Das gelingt durch die das Verfahren kennzeichnende Konzentrierung des Prozeßwassers über die Teigbildung aus einer Mehl-Wasser-Mischung unter dem Einfluß von Zentrifugalkräften. Das konzentrierte Prozeßwasser kann ohne Eindampfung direkt als Futtermittel abgegeben werden. Dadurch können die sonst erforderlichen Eindampfkosten oder die Kosten für sonstige Verbringungsverfahren, wie Verregnen und anaerobe/aerobe Fermentation, vollständig eingespart werden. Für den Fall des Eindampfens sind die dafür entstehenden Kosten gegenüber dem verwirklichten Stand der Technik nur halb so groß. Die insgesamt erzielbaren wirtschaftlichen Vorteile sind gegenüber jedem verwirklichten Verfahren zur Weizenstärke- und - klebergewinnung als sehr beträchtlich zu bezeichnen. Sie beruhen zum Teil auch auf der mit der neuartigen Teigbildung, die zu konstanten Teigeigenschaften führt, erzielbaren Sicherheit im Betrieb der Anlagen.

Nachstehend ist die Erfindung anhand von Ausführungsbeispielen erläutert.

Bei beiden Ausführungsbeispielen sind jeweils die bei dem betreffenden Beispiel relevanten Teilschritte der Erfindung erläutert. Hinsichtlich der Beispiele ist darauf hinzuweisen, daß die angegebenen Massebilanzen so variabel gestaltet werden können, daß die dem Prozeß kontinuierlich zu entziehenden Anteile der insgesamt in Lösung gehenden Masse größer oder kleiner sein können als das in den Ausführungsbeispielen beschrieben ist. Diese Variablität ist kennzeichnend für die Erfindung. Sie hängt mit der Zielsetzung zusammen, im Prozeßwasser die höchtsmögliche Konzentration an löslichen Stoffen aus den Weizenmahlprodukten zu erhalten.

Die Beispiele dienen lediglich dazu, die Erfindung zu erläutern, ohne dabei auf prozeßtechnische Details einzugehen. So sind beispielsweise die Einspeisungspunkte für das Frischwasser lediglich als Möglichkeiten unter anderen zu verstehen. Prozeßtechnisch erfolgt die Einspeisung von im Gegenstrom aus der Auswaschung der Endprodukte stammendem Prozeßwasser vorteilhaft bei der Verdünnung des Teiges vor dessen Trennung in die Produktströme. Die Einspeisungspunkte sind in der Beschreibung nur deshalb so gewählt, um den komplexen Prozeß leicht verständlich beschreiben und an den Rechenbeispielen erläutern zu können.

Die Ausführungsbeispiele sind anhand statistischer Massenbilanzen in der Zeichnung schematisch wiedergegeben. Dabei zeigt:
- Fig. 1: ein Flußdiagramm eines ersten Ausführungsbeispieles der Erfindung; und
- Fig. 2: ein Flußdiagramm eines zweiten Ausführungsbeispieles der Erfindung.

### Beispiel 1:

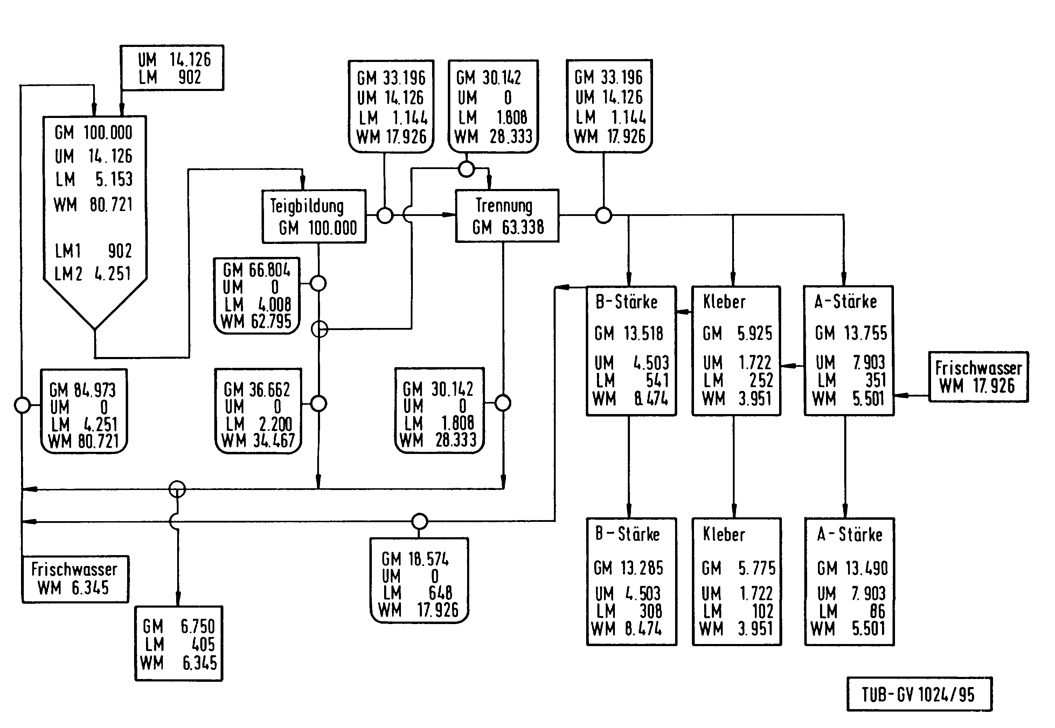

In einem Tank mit Rührwerk (Fig. 1) werden kontinuierlich auf die Trockenmasse bezogen 15.028 kg/h Weizenmehl beliebigen Aschegehalts gegeben. Das Mehl besteht zu 14.126 kg unlöslicher Masse (UM) und 902 kg löslicher Masse (LM). In dem Tank wird ein großer Teil des löslichen Anteils des Mehls durch Suspendieren der Mehlpartikel mit im Gegenstrom und im Kreislauf geführtem Prozeßwasser in Lösung gebracht. Die Prozeßwasserführung erfolgt so, daß die Konzentration des Löslichen im Prozeßwasser 6 % beträgt. Die Prozeßwassermasse ist so bemessen, daß durch den Tank kontinuierlich eine Wassermasse von 80.721 kg/h gefördert wird. In dieser sind 5.153 kg/h LM enthalten, die zu 4.251 kg/h aus dem Prozeßwasserkreislauf und zu 902 kg/h aus dem Mehl stammt. Die geforderte Gesamtmasse (GM) beträgt bei konstantem Massestrom 100.000 kg/h. Die GM stellt nach der Benetzung und Extraktion der Mehlpartikel, unter Berücksichtigung der physikalisch-chemischen Eigenschaften derselben, teilweise eine Suspension und teilweise eine Dispersion dar. In ihr sind die Kleberproteine zwar vollständig benetzt, aber noch wenig chemisch vernetzt, was für ihre nachfolgende Agglomeration und die davon abhängenden plastischelastischen Struktureigenschaften entscheidend ist.

Die GM wird zur Teigbildung kontinuierlich durch eine erste Dekantierzentrifuge geleitet. In ihr erfolgt unter entsprechender Wahl der Prozeßparameter die Kleberagglomeration unter Einwirkung von Zentrifugal- und Scherkräften. Für das hier dargestellte Beispiel wird nun davon ausgegangen, daß der gesamte Feststoff aus dem Unterlauf des Dekanters ausgetragen wird, während in den Oberlauf lediglich das in den Kreislauf zurückzuführende Prozeßwasser gelangt. Im realen Prozeß ist das allerdings nicht so, weil hier ein Teil der Schleimstoffe und der Sekunda-Stärke bereits in dieser Prozeßstufe ausgetragen werden können.

Im Beispiel werden 33.196 kg/h Teig aus dem Unterlauf ausgetragen und 66.804 kg/h Prozeßwasser erscheinen im Oberlauf. 30.142 kg/h des Prozeßwassers werden zur Verdünnung des Teiges verwendet, der in eine zweite Dekantierzentrifuge zur Trennung der Teigmasse in Prima-Stärke, Kleber- und Sekunda-Stärke geleitet wird. 36.662 kg/h des Prozeßwassers werden zurückgeführt. Nach der Trennung gelangen 30.142 kg/h Prozeßwasser in den Oberlauf, die ebenfalls zurückgeführt werden.

Die insgesamt in den Dekantierstufen anfallende Prozeßwassermasse beträgt 66.804 kg/h. Von dieser werden 6.750 kg/h dem Kreislauf entzogen. Üblicherweise wird dieser Prozeßwasseranteil eingedampft. Im Beispiel enthält die Prozeßwassermasse 405 kg/h LM. Demzufolge werden, bezogen auf die insgesamt eingesetzten 902 kg/h LM, ca. 45 % der löslichen Masse des Mehls dem Prozeß kontinuierlich über das konzentrierte Prozeßwasser entzogen.

Da durch die Trennung dem Prozeß eine Gesamtmasse von 33.196 kg/h entzogen wird, die zu 17.926 kg/h aus Wasser (WM) und 1.144 kg/h LM sowie 14.126 kg/h UM besteht, muß dem Prozeß kontinuierlich eine entsprechende Masse wieder zugeführt werden. Dies geschieht über die Zugabe des Mehls, das zu 14.126 kg aus UM und 902 kg aus LM besteht. Folglich werden mit dem Produktstrom in diesem Beispiel 242 kg/h mehr ausgetragen als über das Mehl eingeführt werden. Zum Ausgleich dieser Bilanz wird Frischwasser im Gegenstrom zu den Produkten geführt. Auf diese Weise gelingt es, in 17.926 kg/h WM 648 kg/h LM anzureichern. Die Gesamtmasse dieses Prozeßwasserstroms beträgt 18.574 kg/h. Diese werden kontinuierlich zusammen mit dem Mehl in den Behälter zurückgeführt. Damit durch diesen konstant 100.000 kg/h gefördert werden, müssen noch weitere 6.345 kg/h WM zugeführt werden. In dem Beispiel erfolgt dies vor dem Tank. Im realen Prozeß wird dieses Wasser jedoch üblicherweise bei der Auswaschung der Endprodukte mitverwendet, so daß tatsächlich ein größerer Anteil als der hier angegebene an löslicher Masse in den Kreislauf zurückgeführt wird. Entsprechend kann ein größerer Anteil dieses löslichen Anteils dem Prozeß entzogen werden.

Die Verweilzeit der Masse im Behälter beträgt je nach Ausgestaltung des Verfahrens zwischen 1 und 30 Minuten. Danach richtet sich auch das Volumen des Tanks, respektive seiner Ausgestaltung als Misch- und Rührwerkzeug, durch welchen die Gesamtmasse, für die im Rechenbeispiel 100.000 kg/h angenommen sind, mit konstantem Massestrom kontinuierlich gefördert wird.

Das Mischen von Mehl und Wasser kann im Bereich V von 10 - 40 % Feststoffkonzentration erfolgen. Der Prozeß erfährt im Bereich von 25 % Feststoffkonzentration ein technisches Optimum. Im Bereich der oberen Feststoffkonzentration dient die Dekantierzentrifuge lediglich noch als Teigbildungsmaschine. Je größer die Feststoffkonzentration und je kleiner die Mischzeit sind, um so kürzer ist die Verweilzeit des für das Benetzen der Kleberproteine und Lösen der löslichen Masse zu verwendenden Prozeßwasserstroms. Die Verweilzeit kann in Verbindung mit dem aus dem System kontinuierlich zu entnehmenden Prozeßwasser und seinem Ersatz so gewählt werden, daß sie kürzer als die Generationszeit der Mikroorganismen ist, die über den Rohstoff in den Prozeßwasserstrom gelangen.

### Beispiel 2:

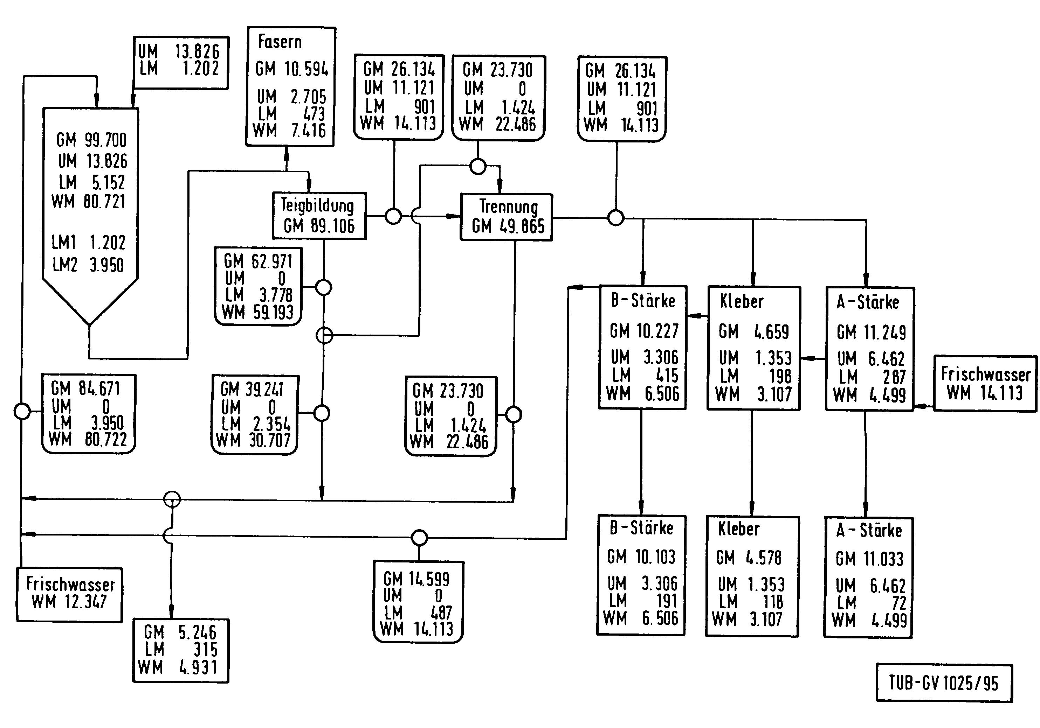

In einem Tank mit Rührwerk (Fig. 2) werden kontinuierlich auf die Trockenmasse bezogen 15.028 kg/h Weizenmahlprodukt gegeben. Das Mahlprodukt besteht zu 13.826 kg unlöslicher Masse (UM) und 1.202 kg löslicher Masse (LM). Ebenso wie im ersten Ausführungsbeispiel beschrieben, wird ein großer Teil des löslichen Anteils des Mahlprodukts im Prozeßwasser in Lösung gebracht. Die Prozeßwassermasse ist so bemessen, daß durch den Tank kontinuierlich eine Wassermasse (WM) von 80.721 kg/h gefördert wird. In dieser sind 5.152 kg/h LM enthalten, die zu 3.950 kg/h aus dem Prozeßwasserkreislauf und zu 1.202 kg/h aus dem Mahlprodukt stammt. Die geförderte Gesamtmasse (GM) beträgt bei konstantem Massestrom 99.700 kg/h. Aus der Suspension/Dispersion werden in einem ersten Verfahrensschritt die Fasern durch Naßsieben abgetrennt. Dadurch werden dem Prozeß 10.594 kg/h Masse kontinuierlich entzogen, die aus 2.705 kg/h UM, 473 kg/h LM und 7.416 kg/h WM bestehen.

Die von den Fasern befreite Gesamtmasse wird zur Teigbildung, wie im ersten Ausführungsbeispiel beschrieben, kontinuierlich durch eine erste Dekantierzentrifuge geleitet. In dieser werden 26.134 kg/h GM als Teig abgeschieden. Im Oberlauf fallen 62.791 kg/h GM an. Diese beiden Masseströme werden so weiterbehandelt, daß bei der Raffination der Produktströme 14.133 kg/h WM im Gegenstrom zugeführt werden. Diese tragen nach der Raffination 487 kg/h LM, so daß insgesamt 14.599 kg/h GM zum Mischen des Mahlprodukts mit dem Prozeßwasserstrom zurückgeführt werden. Aus dem System werden kontinuierlich 5.246 kg/h GM als konzentrierte Lösung entzogen. Dem Prozeßwasserkreislauf werden zusätzlich 12.347 kg/h WM als Frischwasser zugeführt, um die GM von 99.700 kg/h aufrecht zu erhalten.

## Patentansprüche

1. Verfahren zum Herstellen eines Mahlproduktteiges, insbesondere auf Weizenbasis, bei dem eine Mahlprodukt-Wasser-Mischung unter Energieeintrag einer zur Agglomeration der Kleberproteine führenden mechanischen Behandlung unterworfen wird, dadurch gekennzeichnet, daß die mechanische Behandlung der Mahlprodukt-Wasser-Mischung unter Einsatz von Zentrifugalkräften erfolgt.

2. Verfahren nach Anspruch 1, dadurch gekennzeichnet, daß das Mischen von Mahlprodukt und Wasser und/oder die Zentrifugalbehandlung kontinuierlich erfolgt/erfolgen.

3. Verfahren nach Anspruch 1, dadurch gekennzeichnet, daß das Mischen von Mahlprodukt und Wasser und/oder die Zentrifugalbehandlung diskontinuierlich erfolgt/erfolgen.

4. Verfahren nach einem der vorangehenden Ansprüche, dadurch gekennzeichnet, daß das Mischen von Mahlprodukt und Wasser und die Zentrifugalbehandlung in einer Verweilzeit von 1 bis 30 Minuten erfolgen.

5. Verfahren nach Anspruch 4, dadurch gekennzeichnet, daß das Mischen von Mahlprodukt und Wasser und die Zentrifugalbehandlung in einer Verweilzeit von etwa 5 Minuten erfolgen.

6. Verfahren nach einem der vorangehenden Ansprüche, dadurch gekennzeichnet, daß der Mahlproduktteig in Produktströme aufgeteilt und die Produktströme mit Prozeßwasser raffiniert werden.

7. Verfahren nach Anspruch 6, dadurch gekennzeichnet, daß die Gesamtverweilzeit, beginnend mit dem Mischen von Mahlprodukt und Wasser bis zur Raffination der Produktströme mit Prozeßwasser, unter den Prozeßbedingungen kleiner als die Generationszeit von Milchsäurebakterien ist.

8. Verfahren nach einem der vorangehenden Ansprüche, dadurch gekennzeichnet, daß eine Mahlprodukt-Wasser-Mischung mit einem Trockenmassenanteil an Mahlprodukt von 10 bis 50 Gew.-% verwendet wird.

9. Verfahren nach Anspruch 8, dadurch gekennzeichnet, daß eine Mahlprodukt-Wasser-Mischung mit einem Trockenmassenanteil an Mahlprodukt von 10 bis 25 Gew.-% verwendet wird.

10. Verfahren nach Anspruch 9, dadurch gekennzeichnet, daß eine Mahlprodukt-Wasser-Mischung mit einem Trockenmassenanteil an Mahlprodukt von etwa 17,5 Gew.-% verwendet wird.

11. Verfahren nach Anspruch 8, dadurch gekennzeichnet, daß eine Mahlprodukt-Wasser-Mischung mit einem Trockenmassenanteil an Mahlprodukt von etwa 25 Gew.-% verwendet wird.

12. Verfahren nach einem der vorangehenden Ansprüche, dadurch gekennzeichnet, daß die Zentrifugalbehandlung in einer Dekantierzentrifuge erfolgt.

13. Verfahren nach Anspruch 12, dadurch gekennzeichnet, daß ein Oberlauf an Flüssigkeit abgeschieden wird, in dem Teile der löslichen Masse des Mahlproduktes enthalten sind.

14. Verfahren nach Anspruch 13, dadurch gekennzeichnet, daß der Oberlauf neben Teilen der löslichen Masse aus dem Mahlprodukt auch Feststoffanteile und Hydrokolloide aus dem gebildeten Teig enthält.

15. Verfahren nach Anspruch 13 oder 14, dadurch gekennzeichnet, daß der Oberlauf im Kreislauf geführt wird und zusammen mit der Suspendierung sowie Dispergierung der Mahlproduktpartikel erfolgt.

16. Verfahren nach einem der Ansprüche 13 bis 15, dadurch gekennzeichnet, daß der Oberlauf im Gegenstrom zur Raffination der Produktströme und der Trennung des Teiges in die Produktströme erfolgt.

17. Verfahren nach einem der Ansprüche 13 bis 16, dadurch gekennzeichnet, daß der Oberlauf aus der Zentrifugalbehandlung eine Konzentration an gelösten Stoffen von 3 bis 7 Gew.-% aufweist.

18. Verfahren nach Anspruch 17, dadurch gekennzeichnet, daß der Oberlauf aus der Zentrifugalbehandlung eine Konzentration an gelösten Stoffen von etwa 6 Gew.-% aufweist.

19. Verfahren nach einem der vorangehenden Ansprüche, dadurch gekennzeichnet, daß als Mahlprodukt Weizenmehl eingesetzt wird.

20. Verfahren nach einem der Ansprüche 1 bis 19, dadurch gekennzeichnet, daß ein Kleie enthaltendes Mahlprodukt angesetzt, die Kleie vor der Zentrifugalbehandlung aus der Mahlprodukt-Wasser-Mischung naß abgesiebt und der Unterlauf des Siebes der Zentrifugalbehandlung unterworfen wird.

21. Verfahren nach Anspruch 20, dadurch gekennzeichnet, daß als Mahlprodukt ein Vollkornmahlprodukt eingesetzt wird.

22. Verfahren nach Anspruch 20 oder 21, dadurch gekennzeichnet, daß ein mit einer Hammermühle hergestelltes Mahlprodukt eingesetzt wird.

23. Verfahren nach Anspruch 20 oder 21, dadurch gekennzeichnet, daß ein mittels eines Ultra-Rotors oder dergleichen hergestelltes Mahlprodukt eingesetzt wird.

24. Verfahren nach einem der Ansprüche 20 bis 23, dadurch gekennzeichnet, daß das in der abgesiebten Kleie enthaltene Phytat unter der Einwirkung der mahlprodukteigenen Phytase nach Einstellen des pH-Werts und der Temperatur auf das Optimum des Enzyms abgebaut wird.

25. Verfahren nach Anspruch 24, dadurch gekennzeichnet, daß die pH-Werteinstellung über eine mikrobiologische Milchsäurebildung in der feuchten Kleie erfolgt.

26. Verfahren nach einem der vorangehenden Ansprüche, dadurch gekennzeichnet, daß aus dem Mahlproduktteig Kleber und Stärke gewonnen werden.

## Claims

1. A method of producing a milled-product dough, particularly wheat-based, wherein a mixture of milled product and water supplied with energy is subjected to mechanical processing for agglomerating the adhesive proteins, characterised in that the mixture of milled product and water is mechanically processed with application of centrifugal force.

2. A method according to claim 1, characterised in that mixing of the milled product with water and/or centrifugal processing is/are carried out continuously.

3. A method according to claim 1, characterised in that mixing of the milled product with water and/or centrifugal processing is/are carried out discontinuously.

4. A method according to any of the preceding claims, characterised in that mixing of the milled product with water and centrifugal processing are carried out during a residence time of 1 to 30 minutes.

5. A method according to claim 4, characterised in that mixing of the milled product with water and centrifugal processing are carried out during a residence time of about 5 minutes.

6. A method according to any of the preceding claims, characterised in that the milled-product dough is divided into streams of product, and the streams are refined with process water.

7. A method according to claim 6, characterised in that the total residence time from mixing the milled product with water to refining the product streams with process water is less, under the process conditions, than the generation time of lactic acid bacteria.

8. A method according to any of the preceding claims, characterised in that a mixture of milled product and water with a content of dry milled product of 10 to 50% by weight is used.

9. A method according to claim 8, characterised in that a mixture of milled product and water with a content of dry milled product of 10 to 25% by weight is used.

10. A method according to claim 9, characterised in that a mixture of milled product and water with a content of dry milled product of about 17.5% by weight is used.

11. A method according to claim 8, characterised in that a mixture of milled product and water with a content of dry milled product of about 25% by weight is used.

12. A method according to any of the preceding claims, characterised in that the centrifugal processing is carried out in a decanting centrifuge.

13. A method according to claim 12, characterised by separation of a head flow of liquid containing parts of the soluble substance in the milled product.

14. A method according to claim 13, characterised in that the head flow, in addition to parts of the soluble substance from the milled product, also contains solid components and hydrocolloids from the dough formed.

15. A method according to claim 13 or 14, characterised in that the head flow is circulated at the same time as the milled-product particles are suspended or dispersed.

16. A method according to any of claims 13 to 15, characterised in that the head flow is into the stream of product in countercurrent to the refining of the product streams and the separation of the dough.

17. A method according to any of claims 13 to 16, characterised in that the head flow from centrifugal processing has a concentration of dissolved substances of 3 to 7% by weight.

18. A method according to claim 17, characterised in that the head flow from centrifugal processing has a concentration of dissolved substances of about 6% by weight.

19. A method according to any of the preceding claims, characterised in that the milled product used is wheat flour.

20. A method according to any of claims 1 to 19, characterised in that a milled product containing bran is used, the bran is separated by wet screening from the mixture of milled product and water before centrifugal processing, and the tail flow from the screen is subjected to centrifugal processing.

21. A method according to claim 20, characterised in that the milled product used is a wholemeal product.

22. A method according to claim 20 or 21, characterised in that a milled product produced in a hammer mill is used.

23. A method according to claim 20 or 21, characterised in that a milled product produced by an ultra-rotor or the like is used.

24. A method according to any of claims 20 to 23, characterised in that the phytate in the screened bran is decomposed by action of the natural phytase in the milled product after the pH and temperature have been adjusted to the optimum for the enzyme.

25. A method according to claim 24, characterised in that the pH is adjusted by microbiological lactic acid formation in the wet bran.

26. A method according to any of the preceding claims, characterised in that adhesive and starch are obtained from the milled-product dough.

## Revendications

1. Procédé destiné à la préparation d'une pâte de matière moulue, notamment à base de blé, dans le cas duquel un mélange de matière moulue et d'eau est soumis par introduction d'énergie à un traitement mécanique conduisant à l'agglomération des protéines collantes, caractérisé en ce que le traitement mécanique du mélange de matière moulue et d'eau est effectué par l'emploi de forces centrifuges.

2. Procédé selon la revendication 1, caractérisé en ce que le mélange de matière moulue et d'eau et/ou le traitement centrifuge est(sont) effectué(s) en continu.

3. Procédé selon la revendication 1, caractérisé en ce que le mélange de matière moulue et d'eau et/ou le traitement centrifuge est(sont) effectué(s) en discontinu.

4. Procédé selon l'une quelconque des revendications précédentes, caractérisé en ce que le mélange de matière moulue et d'eau et le traitement centrifuge sont effectués pendant un temps de séjour de 1 à 30 minutes.

5. Procédé selon la revendication 4, caractérisé en ce que le mélange de matière moulue et d'eau et le traitement centrifuge sont effectués pendant un temps de séjour de l'ordre de 5 minutes.

6. Procédé selon l'une quelconque des revendications précédentes, caractérisé en ce que la pâte de matière moulue est répartie en flux de produits, et en ce que les flux de produits sont affinés avec de l'eau de procédé.

7. Procédé selon la revendication 6, caractérisé en ce que, dans les conditions de procédé, le temps de séjour total commençant par le mélange de matière moulue et d'eau jusqu'à l'affinage des flux de produits avec de l'eau de procédé, est inférieur au temps de génération de bactéries d'acide lactique.

8. Procédé selon l'une quelconque des revendications précédentes, caractérisé en ce qu'il est utilisé un mélange de matière moulue et d'eau d'une teneur en masse sèche de matière moulue de 10 à 50 % en poids.

9. Procédé selon la revendication 8, caractérisé en ce qu'il est utilisé un mélange de matière moulue et d'eau d'une teneur en masse sèche de matière moulue de 10 à 25 % en poids.

10. Procédé selon la revendication 9, caractérisé en ce qu'il est utilisé un mélange de matière moulue et d'eau d'une teneur en masse sèche de matière moulue de l'ordre de 17,5 % en poids.

11. Procédé selon la revendication 8, caractérisé en ce qu'il est utilisé un mélange de matière moulue et d'eau d'une teneur en masse sèche de matière moulue de l'ordre 25 % en poids.

12. Procédé selon l'une quelconque des revendications précédentes, caractérisé en ce que le traitement centrifuge est effectué dans une centrifugeuse de décantation.

13. Procédé selon la revendication 12, caractérisé en ce qu'un débit de la partie supérieure en liquide contenant des parties de la masse soluble de la matière moulue est séparé.

14. Procédé selon la revendication 13, caractérisé en ce que, outre des parties de la masse soluble provenant de la matière moulue, le débit de la partie supérieure contient également des proportions de matières solides et des hydrocolloïdes de la pâte préparée.

15. Procédé selon la revendication 13 ou 14, caractérisé en ce que le débit de la partie supérieure circule dans le circuit, et a lieu avec la suspension ainsi que la dispersion des particules de la matière moulue.

16. Procédé selon l'une quelconque des revendications 13 à 15, caractérisé en ce que le débit de la partie supérieure a lieu à contre-courant de l'affinage des flux de produits et de la répartition de la pâte en flux de produits.

17. Procédé selon l'une quelconque des revendications 13 à 16, caractérisé en ce que la concentration en matières dissoutes du débit de la partie supérieure provenant du traitement centrifuge est de 3 à 7 % en poids.

18. Procédé selon la revendication 17, caractérisé en ce que la concentration en matières dissoutes du débit de la partie supérieure provenant du traitement centrifuge est de l'ordre de 6 % en poids.

19. Procédé selon l'une quelconque des revendications précédentes, caractérisé en ce que de la farine de blé est utilisée en tant que matière moulue.

20. Procédé selon l'une quelconque des revendications 1 à 19, caractérisé en ce que qu'une matière moulue contenant du son est préparée, en ce que le son est tamisé à l'état humide du mélange de matière moulue et d'eau avant le traitement centrifuge, et en ce que le débit de la partie inférieure du tamis est soumis au traitement centrifuge.

21. Procédé selon la revendication 20, caractérisé en ce qu'une matière moulue de seigle complet est utilisée en tant que matière moulue.

22. Procédé selon la revendication 20 ou 21, caractérisé en ce qu'il est utilisé une matière moulue fabriquée avec un broyeur à marteaux.

23. Procédé selon la revendication 20 ou 21, caractérisé en ce qu'il est utilisé une matière moulue fabriquée au moyen d'un ultra-rotor ou analogue.

24. Procédé selon l'une quelconque des revendications 20 à 23, caractérisé en ce que, après le réglage du pH et de la température, le phytate contenu dans le son tamisé sous l'effet de la phytase propre à la matière moulue est dégradé à l'optimum de l'enzyme.

25. Procédé selon la revendication 24, caractérisé en ce que le réglage du pH est effectué dans le son humide par l'intermédiaire d'une formation d'acide lactique microbiologique.

26. Procédé selon l'une quelconque des revendications précédentes, caractérisé en ce que de la colle et de l'amidon sont récupérés à partir de la pâte de matière moulue.
